**Europäisches Patentamt**

**European Patent Office**

**Office européen des brevets**

(11) Veröffentlichungsnummer : **0 047 798**
**B1**

(12) **EUROPÄISCHE PATENTSCHRIFT**

(45) Veröffentlichungstag der Patentschrift :
05.10.83

(51) Int. Cl.³ : **B 01 D 39/16**// D01D5/247

(21) Anmeldenummer : **80105531.0**

(22) Anmeldetag : **15.09.80**

(54) **Filterpackung.**

(43) Veröffentlichungstag der Anmeldung :
24.03.82 Patentblatt 82/12

(45) Bekanntmachung des Hinweises auf die Patenterteilung : 05.10.83 Patentblatt 83/40

(84) Benannte Vertragsstaaten :
**AT BE CH DE FR GB IT LI LU NL SE**

(56) Entgegenhaltungen :
**EP A 0 000 740**
**DE A 1 536 933**
**DE A 2 739 782**
**DE A 2 752 821**
**DE A 2 854 314**

(73) Patentinhaber : **Firma Carl Freudenberg**
**Höhnerweg 2**
**D-6940 Weinheim/Bergstrasse (DE)**

(72) Erfinder : **Schmidt, Klaus, Dr.**
**Haagackerweg 12**
**D-6945 Hirschberg 1 (DE)**

(74) Vertreter : **Weissenfeld-Richters, Helga, Dr.**
**Höhnerweg 2**
**D-6940 Weinheim/Bergstrasse (DE)**

Filterpackung

Die Erfindung betrifft eine Filterpackung mit einem Gehalt an elektrostatisch ersponnenen Mikrofasern mit stark poröser Oberfläche, die gegebenenfalls durch eine poröse Trägerschicht abgedeckt ist.

Ein Filter der vorstehend angesprochenen Art ist aus DE-A 20 32 072 bekannt. Die Fasern sind häufig bandförmig ausgebildet, und sie zeigen eine unregelmäßige, stark poröse Oberflächenstruktur. Der Querschnitt der einzelnen Poren ist in Richtung der Oberfläche stark erweitert, und die Anzahl nimmt in gleicher Richtung ausgehend von der Faserachse beträchtlich zu. Derartige Fasern haben nur eine geringe mechanische Festigkeit, und es hat sich gezeigt, daß der erzielte Abscheidungsgrad bei vertretbarem Strömungswiderstand einer daraus gebildeten Filterpackung den in bestimmten Bereichen bestehenden Ansprüchen nur selten gerecht wird. Hierzu sind insbesondere die Klimatisierungseinrichtungen kernkrafttechnischer Anlagen zu zählen, deren Filter eine hochgradige Abscheidung radioaktiv verseuchten Luftstaubes gewährleisten müssen. Ein anderer Bereich mit ähnlich hohen Anforderungen ist der Bereich des persönlichen Atemschutzes, in dem es insbesondere um die Reinigung der Atemluft von Schadstoffen bei möglichst niedrigem Luftwiderstand geht. Derartige Schadstoffe können in festen oder flüssigen Schwebstoffen enthalten sein, die chemisch oder biologisch verseucht sind.

Der Erfindung liegt die Aufgabe zugrunde, eine Filterpackung zur Verwendung in der Feinstfiltration zu entwickeln, die bei einem geringen Strömungswiderstand eine hochgradige Abscheidung derartiger Feinststoffe ermöglicht.

Diese Aufgabe wird erfindungsgemäß mit einer Filterpackung der eingangs genannten Art gelöst, die dadurch gekennzeichnet ist, daß die enthaltenen Mikrofasern einen porenfreien Faserkern enthalten, der vollständig von einem offenporig geschäumten Fasermantel umgeben ist, daß die Poren den Fasermantel bei einem im wesentlichen gleichbleibenden Querschnitt im wesentlichen senkrecht durchdringen und daß der Fasermantel und der Faserkern aus dem gleichen polymeren Werkstoff bestehen.

Die Poren sind überwiegend als senkrechte Zylinder ausgebildet, wobei der Divergenzwinkel in Richtung der Öffnung weniger als 15° beträgt. Sie bilden dadurch in bezug auf die Öffnung passierende Gase strömungsberuhigte Hohlräume, in denen Mikropartikel weitgehend unabhängig von der Strömungsgeschwindigkeit des Gases abgeschieden werden können.

Die Mikrofasern haben einen größten Durchmesser von 1 bis 20 μm. Sie weisen aufgrund der Porenfreiheit im Bereich des Faserkernes eine große Zugfestigkeit auf, wodurch auch bei hohen Strömungsgeschwindigkeiten das Abbrechen von Faserbestandteilen oder deren gegenseitige Verpressung weitgehend vermieden wird. Der ursprünglich vorhandene Strömungswiderstand bleibt dadurch weitgehend auch nach längerem Gebrauch erhalten. Er läßt sich zusätzlich stabilisieren durch gleichmäßige Einmischung gekräuselter Stapelfasern. Hierdurch wird eine große Tiefe der Filterpackung bei gleichbleibendem Strömungswiderstand möglich, was eine zusätzliche Sicherheit gegen den Durchbruch kontaminierter Partikel bietet.

Die Stapelfasern und die Mikrofasern sollen aus dem selben polymeren Werkstoff bestehen, um zu gewährleisten, daß die elektrische Aufladung der Mikrofasern möglichst ungestört erhalten bleibt. Hierdurch wird der Abscheidungsgrad der Filterpackung verbessert.

In Abhängigkeit von dem vorgesehenen Verwendungszweck kann die äußere Formgebung der Filterpackung verschieden gestaltet sein. In bezug auf die Herstellung eines Taschenfilters hat es sich als zweckmäßig erwiesen, wenn die Mikrofasern in einer wirren Verteilung flächenhaft zusammengelagert und gegebenenfalls untereinander verpresst sind. In bezug auf die Reinigung von Gasen, deren Verunreinigungen in einem großen Durchmesserspektrum angesiedelt sind, hat es sich als vorteilhaft erwiesen, die vorgeschlagene Filterpackung als letztes Glied hinter einer Kette anderer Filter mit zunehmender Feinheit anzuordnen. Diese können ebenfalls aus einem faserigen Material bestehen, und es ist selbstverständlich möglich, sämtliche Filter unmittelbar aufeinanderliegend anzuordnen und gegebenenfalls in einer gemeinsamen Randeinspannung zu verankern. In besonders kritischen Fällen können Flatterbewegungen durch eine gemeinsame Verpressung zwischen Kunststoffgittern verhindert werden. Parallel zu der Intensität der vorgenommenen Verpressung ergibt sich eine Steigerung des Strömungswiderstandes und des Abscheidungsgrades. Der Anwender hat dadurch die Möglichkeit, beides seinen speziellen Verhältnissen anzupassen.

Sofern die Filterpackung aus einem Gemisch aus Mikrofasern und Stapelfasern besteht, hat es sich als vorteilhaft erwiesen, wenn das Verhältnis aus dem mittleren Durchmesser der Stapelfasern und dem größten Durchmesser der Mikrofasern 3 bis 10 beträgt. Beide Faserarten können prinzipiell aus allen polymeren Werkstoffen bestehen, die in einem elektrostatischen Spinnverfahren einsetzbar sind. Zu beachten ist lediglich, daß die erhaltenen Mikrofasern die eingangs beschriebene Gestalt annehmen, worunter auch zu verstehen ist, daß der von den Poren überdeckte Oberflächenanteil bei einem Durchmesser von 0,01 bis 0,5 μm und einer Tiefe von 0,1 bis 2 μm 10 bis 99 % beträgt. Derartige Mikrofasern lassen sich nach den Erfahrungen der Anmelderin unter Verwendung einer Spinnlösung aus Polycarbonat in Dimethylenchlorid ohne weiteres bei Einhaltung bestimmter Verfahrensbedingungen gewinnen.

Der flächenmäßige Anteil des geschäumten Fasermantels am Gesamtquerschnitt beträgt 40 bis 80 %, vorzugsweise 60 %. Das insgesamt zur Verfügung stehende Porenvolumen ist dementsprechend erheblich und erlaubt die Adsorbtion großer Mengen von Verunreinigungen.

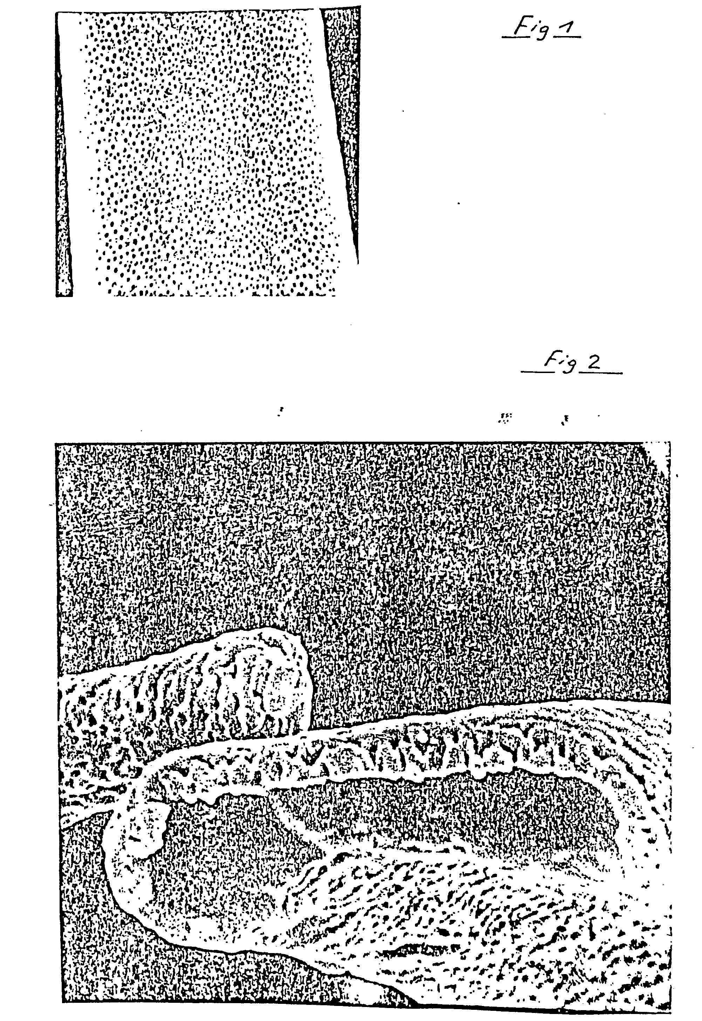

Die in der Anlage beigefügte Zeichnung zeigt in Figur 1 eine Mikrofaser der erfindungsgemäßen Art in der Draufsicht im Maßstab 7 000 : 1, in Figur 2 die Faser nach Figur 1 in quergeschnittener Darstellung im Maßstab 14 000 : 1. Die Gleichmäßigkeit des geschäumten Fasermantels hinsichtlich der Porengröße und- verteilung ist deutlich erkennbar. Gut erkennbar ist die klare Trennung des Fasermantels von dem porenfreien, eine molekulare Orientierung aufweisenden Faserkern.

## Ansprüche

1. Filterpackung mit einem Gehalt an elektrostatisch ersponnenen Mikrofasern mit stark poröser Oberfläche, die gegebenenfalls durch eine oder mehrere poröse Trägerschichten abgedeckt ist, dadurch gekennzeichnet, daß die Mikrofasern einen porenfreien Faserkern enthalten, der vollständig von einem offenporig geschäumten Fasermantel umgeben ist, daß die Poren den Fasermantel bei einem im wesentlichen gleichbleibenden Querschnitt im wesentlichen senkrecht durchdringen, und daß der Fasermantel und der Faserkern aus dem selben polymeren Werkstoff bestehen.

2. Filterpackung nach Anspruch 1, dadurch gekennzeichnet, daß die Mikrofasern in einer wirren Verteilung flächenhaft zusammengelagert und gegebenenfalls verpresst sind.

3. Filterpackung nach Anspruch 1 bis 2, dadurch gekennzeichnet, daß die Mikrofasern gleichmäßig mit gekräuselten Stapelfasern vermischt sind.

4. Filterpackung nach Anspruch 3, dadurch gekennzeichnet, daß die Stapelfasern aus dem gleichen oder einem artverwandten polymeren Werkstoff bestehen wie die Mikrofasern.

5. Filterpackung nach Anspruch 1 bis 4, dadurch gekennzeichnet, daß das Verhältnis aus dem mittleren Durchmesser der Stapelfasern und dem größten Durchmesser der Mikrofasern 3 bis 10 beträgt.

## Claims

1. A filter packing with a content of electrostatically spun micro-fibres with highly porous surface being covered if necessary by one or several porous covering layers characterized in that the micro-fibres contain a pore-free fibre core completely surrounded by an open-pore foamed fibre covering, the pores of the fibre covering being of generally uniform cross-section and perpendicular to the surface of the fibre covering, the fibre covering and the fibre core consisting of the same polymeric material.

2. A filter packing according to claim 1, characterized in that the micro-fibres are deposited in a random distribution and if necessary pressed together.

3. A filter packing according to claims 1 to 2, characterized in that the micro-fibres are uniformly mixed with curled staple fibres.

4. A filter packing according to claim 3, characterized in that the staple fibres consist of the same or a related material as the micro-fibres.

5. A filter packing according to claims 1 to 4, characterized in that the ratio of the mean diameter of the staple fibres to the maximum diameter of the micro-fibres is 3 to 10.

## Revendications

1. Matériau filtrant contenant des microfibres obtenues par filage électrostatique et présentant une surface fortement poreuse, qui est éventuellement recouvert d'une couche de support poreuse, caractérisé en ce que les microfibres qu'il contient possèdent un noyau exempt de pores et enveloppé complètement d'une gaine en mousse à pores ouverts, que les pores de la gaine ont une section essentiellement constante et traversent la gaine pour l'essentiel perpendiculairement et que la gaine et le noyau de la fibre sont faits du même polymère.

2. Matériau filtrant selon la revendication 1, caractérisé en ce que les microfibres sont rassemblées à plat, sans orientation, et sont éventuellement assemblées ensuite par compression.

3. Matériau filtrant selon la revendication 1 ou 2, caractérisé en ce que les microfibres sont mélangées de façon uniforme avec des fils ou des fibres coupés et frisés.

4. Matériau filtrant selon la revendication 3, caractérisé en ce que les fibres coupées sont faites du même polymère que les microfibres ou d'un polymère de nature semblable.

5. Matériau filtrant selon la revendication 3 ou 4, caractérisé en ce que le rapport entre le diamètre moyen des fibres coupées et le plus grand diamètre des microfibres est compris entre 3 : 1 et 10 : 1.

Fig 1

Fig 2